# EUROPEAN PATENT APPLICATION

(11) **EP 4 768 366 A1**
(43) Date of publication of application: **01.07.2026**
(21) Application number: 25223312.7
(22) Date of filing: 15.12.2025
(51) Int. Cl.: B62D 25/04, B62D 25/02, B62D 25/08, B62D 25/14, B62D 27/02

(54) **BODY STRUCTURE FOR VEHICLE AND VEHICLE**

(30) Priority: 26.12.2024 JP 2024230309
(71) Applicant: MAZDA MOTOR CORPORATION, Hiroshima 730-8670 (JP)
(72) Inventor: KUMAGAI, Jun, Aki-gun, Hiroshima, 730-8670 (JP); MARUTA, Ryo, Aki-gun, Hiroshima, 730-8670 (JP); SHIMANAKA, Tsuneki, Aki-gun, Hiroshima, 730-8670 (JP)
(74) Representative: Lorenz Seidler Gossel Part. mbB

(57) **Abstract**

[Problem] To firmly support an apron frame provided on an outer side of a suspension housing by a hinge pillar via a bracing rein even when a front wheel is arranged on a front side as in an FR sports car, for example.

[Solution] The invention includes: a hinge pillar extending in an up-down direction on a vehicle width outer side of a dash panel 2; a side sill 4 extending in a vehicle rear direction from vicinity of a lower end portion of a hinge pillar 7; an apron frame 8 extending forward from vicinity of an upper portion of the hinge pillar 7 and supporting a vehicle outer side of a front-wheel suspension housing 65; and bracing reins 91, 92 obliquely joining a front portion of the hinge pillar 7 and a lower portion of the apron frame 8 in a vehicle side view. In the hinge pillar 7, a hinge pillar closed cross section 7S extending in the up-down direction is displaced forward to a bottom near a height of the side sill 4, and lower end portions of the bracing reins 91, 92 are joined to a portion of the hinge pillar 7 in front of an upper end portion thereof.

## Description

### [Technical Field]

The present invention relates to a body structure for a vehicle that includes: a hinge pillar that has a closed cross section extending in an up-down direction; a suspension housing spaced forward from the hinge pillar; and an apron frame that extends forward from an upper portion of the hinge pillar or a vicinity thereof to support the suspension housing. The present invention further relates to a vehicle with a body structure.

### [Background Art]

During travel of a vehicle, a suspension housing receives a thrust load from a front wheel via a suspension damper, and this input load is transmitted to an apron frame. Thus, it is necessary to secure support rigidity of the suspension housing by the apron frame.

In general, in a front-engine, rear-wheel-drive (FR) vehicle, the front wheel is spaced forward from a hinge pillar when compared to a front-engine, front-wheel-drive (FF) vehicle. Thus, the support rigidity of the suspension housing by the apron frame is further required.

In view of the above, as exemplified in Patent Literature 1, itis known that a bracing rein that couples the apron frame and the hinge pillar in a bracing manner is provided to support the apron frame, which is provided on an outer side of the suspension housing, from below, and the bracing rein thereby shares and supports the thrust load, which is input to the suspension housing during the travel of the vehicle, with the apron frame.

However, in a vehicle, such as a sports car, that emphasizes driving performance and body design, there is a case where it is required to arrange the front wheel further forward in comparison with the general FR vehicle. In such a case, a distance between the hinge pillar and the suspension housing is too far to directly couple the hinge pillar and the suspension housing by the bracing rein, and thus it may be impossible for the apron frame to efficiently support the suspension housing.

In order to solve such a problem, as exemplified in Patent Literature 2, such a vehicle has been proposed that a cowl side rein is provided from a front end of a side sill, which is located in front of the hinge pillar, to the apron frame along a rear edge of a wheelhouse. However, such a vehicle is possibly disadvantageous in securing the support rigidity of the suspension housing together with the apron frame since bracing against a strong pillar rein cannot be configured.

### [Citation List]

### [Patent Literature]

[Patent Literature 1] JP2020-50032A
[Patent Literature 2] JP2015-96350A

### [Summary of Invention]

### [Technical Problem]

An object of the invention is to provide a body structure for a vehicle capable of firmly supporting an apron frame, which is provided on an outer side of a suspension housing, by a hinge pillar via a bracing rein even when a front wheel is further arranged forward as in an FR sports car in comparison with an FF vehicle.

### [Solution to Problem]

The problem is solved by means of a body structure for a vehicle according to claim 1 and by a vehicle according to claim 15. Preferred embodiments are the subject-matter of the subclaims.

The invention is a body structure for a vehicle including: a dash panel that separates a cabin and a front space of the cabin in a vehicle front-rear direction; a front frame that extends forward from the dash panel and supports a vehicle inner side of a front-wheel suspension housing; a front pillar that has a closed cross section extending in a front-down direction and supports a front windshield from each of left and right sides; an apron frame that extends forward from vicinity of a base portion of the front pillar and supports a vehicle outer side of the front-wheel suspension housing; a pair of left and right side sills, which is arranged on both left and right sides on a rear side of a lower portion of the dash panel and extends in the vehicle front-rear direction; a hinge pillar that extends in an up-down direction between a base portion of the front pillar and respective one of the side sills; and a bracing rein that obliquely joins a front portion of the hinge pillar and a lower portion of the apron frame in a vehicle side view, in which, in the hinge pillar, at least a front portion of a hinge pillar closed cross section that extends in the up-down direction is displaced forward to a bottom, which is near a height of respective one of the side sills, from the base portion of the front pillar, and a lower end portion of the bracing rein is joined to a portion of the hinge pillar in front of an upper end portion thereof that is joined to the base portion of the front pillar.

According to the invention, the hinge pillar is brought closer to the front-wheel suspension housing provided on a front side of the vehicle to shorten the bracing rein while maintaining a joint state of the upper end portion thereof with the front pillar base portion. In this way, the suspension housing can be firmly supported by the hinge pillar.

As an aspect of the invention, the hinge pillar may include an outer hinge pillar that is provided with a hinge attachment portion for attaching a door hinge on each of upper and lower sides, and the bracing rein may include a first bracing rein that joins the hinge pillar closed cross section, which corresponds to a height of the upper hinge attachment portion of the upper and lower hinge attachment portions of the outer hinge pillar, and a base portion of the apron frame.

According to the invention, since the first bracing rein, which is joined to the apron frame extending forward from the vicinity of the front pillar base portion and the hinge pillar extending downward, is provided in a joint portion therebetween, the first bracing rein can be downsized.

As an aspect of the invention, a lower end portion of the hinge pillar may be joined to a front end portion of respective one of the side sills, and the bracing rein may include a second bracing rein that joins a portion in front of the base portion of the apron frame and the lower end portion of the hinge pillar.

According to the invention, the suspension housing can be supported via the second bracing rein by the lower end portion of the hinge pillar 7, which is the joint portion with the front end portion of the side sill.

As an aspect of the invention, the hinge pillar may include the outer hinge pillar that is displaced forward to the bottom from the base portion of the front pillar and is arranged to be inclined downward to the front in the vehicle side view, a pair of upper and lower door hinges may be attached to the outer hinge pillar along a front-down inclination direction, and a swing door, a door rear portion of which is displaced upward when the door is opened, may be pivotally supported by the outer hinge pillar via the pair of upper and lower door hinges.

According to the invention, the door having a high design property can be achieved by using the outer hinge pillar, which is arranged to be inclined downward to the front.

### [Advantageous Effects of Invention]

The invention can provide the body structure for a vehicle capable of firmly supporting the apron frame, which is provided on the outer side of the suspension housing, by the hinge pillar via the bracing rein even when a front wheel is further arranged forward as in an FR sports car in comparison with an FF vehicle, for example.

### [Brief Description of Drawings]

[FIG. 1] FIG. 1 is a perspective view in which a main section of a vehicle having a body structure in the present embodiment is seen from a body front side and a right side.
[FIG. 2] FIG. 2 is a side view in which the main section of the vehicle having the body structure in the present embodiment is seen from the right side.
[FIG. 3] FIG. 3 is a bottom view of the main section of the vehicle having the body structure in the present embodiment.
[FIG. 4] FIG. 4 is a cross-sectional view of a body central portion and a right side that is taken along line A-A in FIG. 2.[FIG. 5] FIG. 5 is an enlarged perspective view in which the main section of the vehicle having the body structure in the present embodiment is seen from the body front side and the right side.
[FIG. 6] FIG. 6 is a cross-sectional view of a body right side that is taken along line B-B in FIG. 2.
[FIG. 7] FIG. 7 is an enlarged perspective view in which the main section of the vehicle having the body structure in the present embodiment is seen from the body front side and the right side.
[FIG. 8] FIG. 8 is a cross-sectional view of the body right side that is taken along line C-C in FIG. 2.

### [Description of Embodiments]

A description will hereinafter be made on, as an embodiment of the invention, an embodiment in which a body structure for a vehicle in the invention is applied to a front-engine, rear-wheel-drive (FR) sports car with reference to the drawings. In the drawings, an arrow F indicates a vehicle front direction, an arrow U indicates a vehicle up direction, an arrow W indicates a vehicle width direction, OUT indicates an outer side in a vehicle width direction (also referred to as a "vehicle width outer side"), and IN indicates an inner side in the vehicle width direction (also referred to as a "vehicle width inner side").

Since the body structure in the present embodiment is a substantially bilaterally-symmetrical structure, a description will be centered on a configuration on a vehicle right side. In the following description, each of front, rear, right, left, up, and down directions indicates a respective direction with a body being a reference unless otherwise specified, and "rein" stands for "reinforcement".

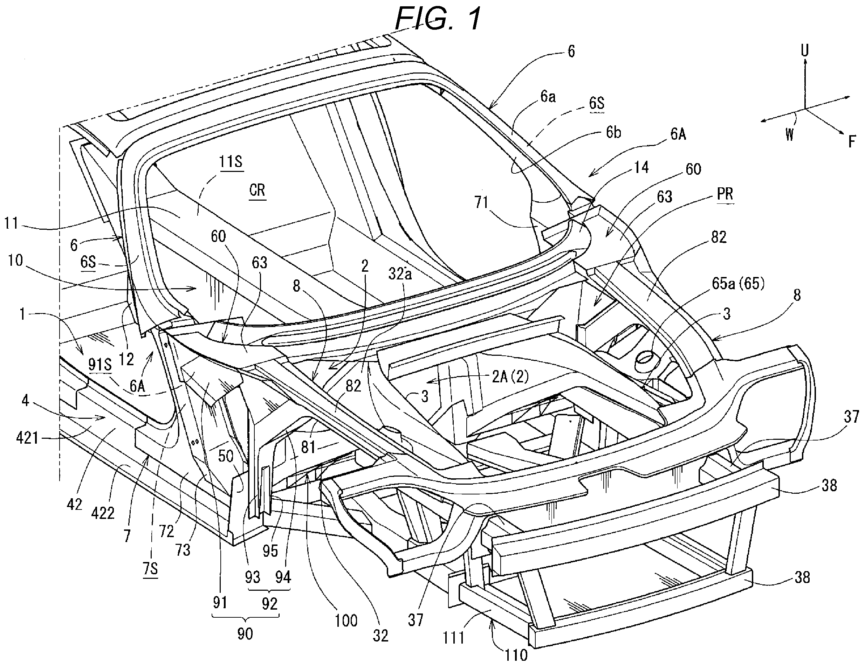

As illustrated in FIGs. 1 to 3, the body structure in the present embodiment mainly includes a floor panel 1 provided with a tunnel portion 10, a dash panel 2, a front frame (also referred to as a front side frame) 3, a side sill 4, a torque box 5, a front pillar 6, a hinge pillar 7, an apron frame 8, a dash rein 9, a tunnel upper frame 11, and a tunnel side frame 12.

Of these elements, the front frames 3, the side sills 4, the torque boxes 5, the front pillars 6, the hinge pillars 7, the apron frames 8, the dash reins 9, and the tunnel side frames 12 are each provided as a left and right pair.

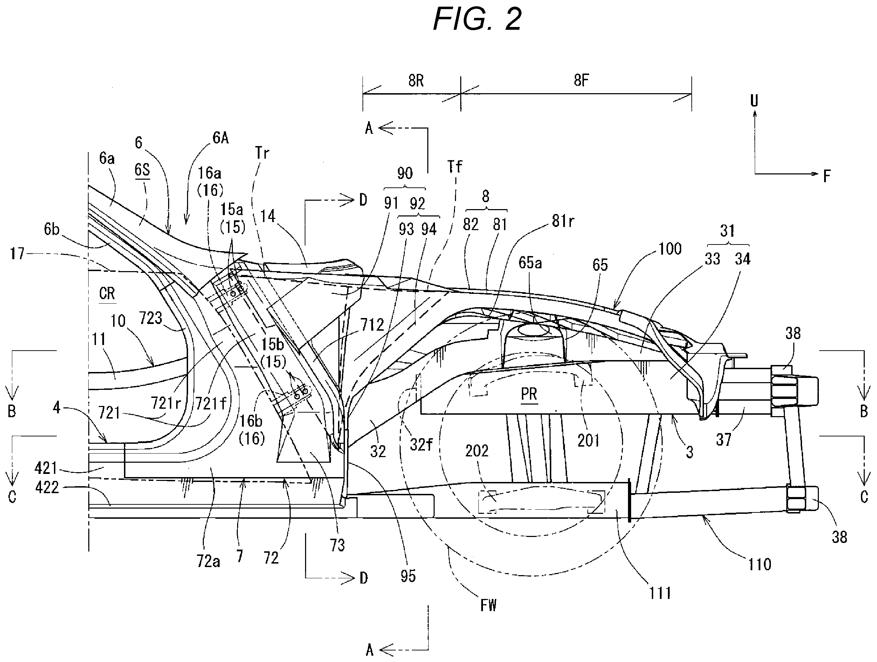

As illustrated in FIGs. 1 and 2, the vehicle in the present embodiment includes subframes (also referred to as "suspension cross members") 110, each of which supports a suspension for suspending a front wheel FW, on both left and right sides under a power unit room PR. The subframe 110 is only illustrated in FIGs. 1 and 2.

In FIG. 2, an upper arm support frame 34 supports a vehicle width inner end of an upper arm 201 provided in the suspension in a manner to be swingable in the up-down direction, and a lower arm support frame 111 supports a vehicle width inner end of a lower arm 202 provided in the suspension in a manner to be swingable in the up-down direction. For example, the subframe 110 is formed in a shape of parallel crosses by combining a plurality of frame members having a closed cross section along an extending direction of such upper arm support frame 34 and lower arm support frame 111, and the like.

### (Floor Panel 1)

As illustrated in FIG. 1, in a body lower portion, the floor panel 1 extends in the vehicle width direction and the front-rear direction to constitute a floor surface of a cabin CR. The tunnel portion 10 that bulges upward and extends in the front-rear direction within the cabin CR is formed in a central portion of the floor panel 1 in the left-right direction.

### (Tunnel Upper Frame 11 and Tunnel Side Frame 12)

The tunnel portion 10 at a center of the floor panel 1 in the vehicle width direction is formed such that a cross section orthogonal to the front-rear direction bulges upward in a gate shape by a pair of left and right side surface portions and an upper surface portion that connects upper ends of these side surface portions in the vehicle width direction.

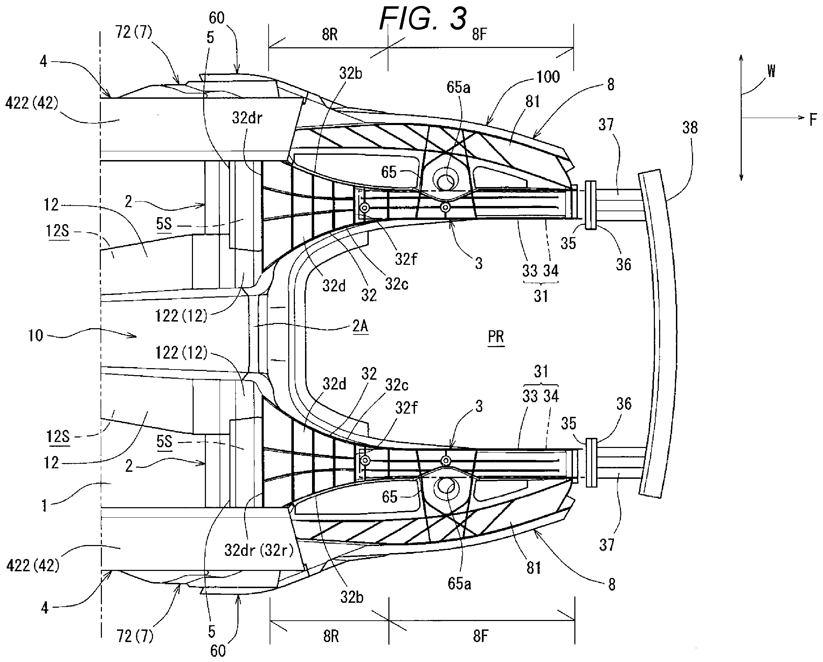

As a backbone frame that extends in the front-rear direction, the tunnel upper frame 11 is joined to an upper portion of the tunnel portion 10 (see FIG. 1). In a cross section orthogonal to the front-rear direction, the tunnel upper frame 11 is substantially formed in a U-shape that is opened downward and has corners in both end portions in the vehicle width direction, has lower end portions on both of the left and right sides that are respectively joined to upper portions of the left and right side surface portions, and thereby forms a closed cross section 11S, which extends over an entire length in the front-rear direction including a front end of the tunnel portion 10, with the upper surface portion of the tunnel portion 10. As illustrated in FIG. 3, the tunnel side frames 12, each of which has a closed cross section 12S extending in the front-rear direction, are provided in lower end portions on both of the left and right sides of the tunnel portion 10.

### (Dash Panel 2)

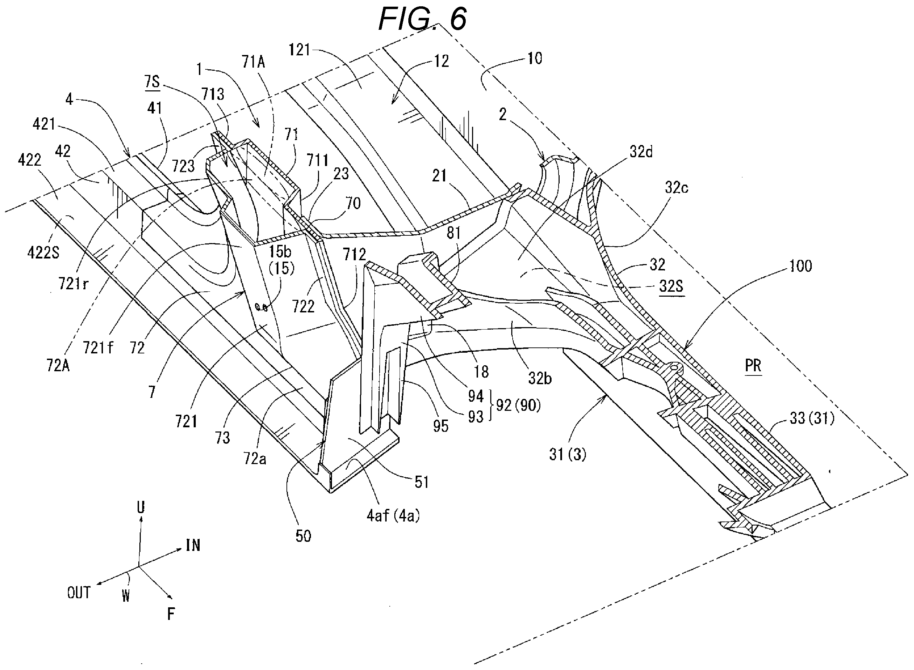

As illustrated in FIG. 6, the dash panel 2 is a vertical wall-shaped plate member that is disposed along the vehicle width direction and the vehicle up-down direction in a manner to separate the cabin CR and the power unit room PR as a front space thereof in the front-rear direction. More specifically, the dash panel 2 includes: a body portion 21 that extends along the vehicle up-down direction; a kick-up portion 22 that extends downward in the vehicle to the rear of the vehicle from a lower end portion of the body portion 21; and left and right vehicle width outer edge flange portions 23. These body portion 21, kick-up portion 22, and vehicle width outer edge flange portions 23 are integrally formed by pressing a single flat sheet, respectively.

A rear end of the kick-up portion 22 of the dash panel 2 is coupled to a front end of the floor panel 1 by welding or the like.

Furthermore, as illustrated in FIGs. 1 and 3, a tunnel opening 2A that bulges upward is formed in a central portion in the vehicle width direction of a lower portion of the dash panel 2. This tunnel opening 2A is joined to the front end of the tunnel portion 10 that is formed in the central portion of the floor panel 1 in the vehicle width direction (see FIG. 3). A space below the tunnel portion 10 and the power unit room PR communicate with each other in the front-rear direction via the tunnel opening 2A.

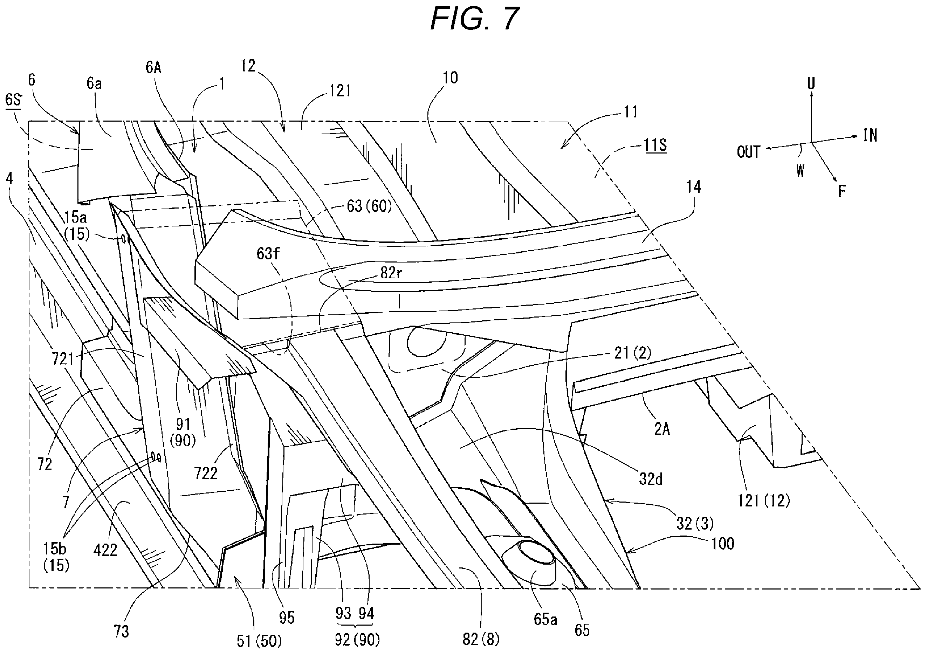

As illustrated in FIGs. 6 to 8, each of the left and right vehicle width outer edge flange portions 23 of the dash panel 2 extends rearward from an outer edge portion in the vehicle width direction of the dash panel 2, is formed over a substantially entire length in the up-down direction of the outer edge portion in the vehicle width direction, and is joined to a side inner panel 70 and an inner side sill 41, which will be described below.

An upper end portion of the body portion 21 of the dash panel 2 extends forward (not illustrated), and a trough-shaped cowl panel 14 as illustrated in FIG. 1 is installed on an upper surface portion thereof. The cowl panel 14 has rigidity for supporting a lower portion of a front windshield (not illustrated), which is inclined in a front-down direction, via a filler from below over substantially entirety thereof in the vehicle width direction, and extends in the vehicle width direction over a substantially entire length of the dash panel 2.

### (Front Frame 3)

As illustrated in FIGs. 1 to 6, the front frames 3 are body rigid members, each of which extends in the front-rear direction from a front surface of the dash panel 2, on both left and right sides of the power unit room PR in front of the dash panel 2.

Each of the front frames 3 includes: a front frame rear portion 32 that extends forward in the vehicle from the front surface of the dash panel 2; and a front frame front portion 31 that extends further forward from a front position of the front frame rear portion 32.

The front frame rear portion 32 is provided as a rear enlargement portion that is gradually enlarged both leftward and rightward as well as downward to a rear end portion from the front frame front portion 31, and a rear end portion 32r is joined to the front surface of the dash panel 2.

Meanwhile, as illustrated in FIGs. 2 and 3, a lower portion of a front end portion of the front frame rear portion 32 is located on a center axis of the front frame 3, and is formed with a vertical wall-shaped rib 32f against which a rear end portion of the front frame front portion 31 can abut from the front.

The front frame front portion 31 includes a front extending portion 33 and a front frame front body portion 34 that are arranged in parallel to each other on upper and lower sides along the front-rear direction.

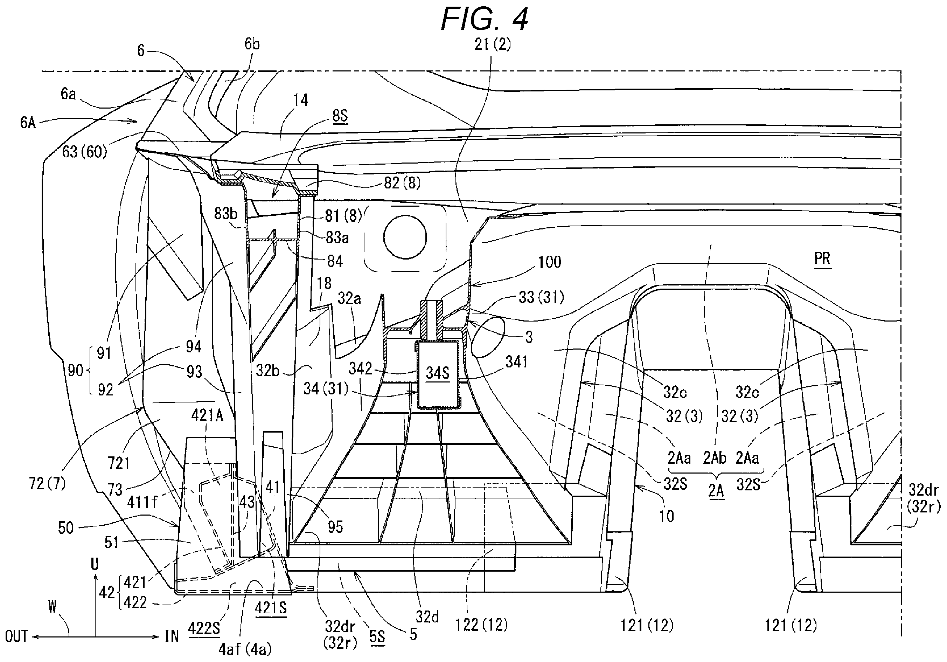

The front frame front body portion 34 extends linearly on the center axis along the front-rear direction of the front frame 3, and, as illustrated in FIG. 4, forms a closed cross section 34S, in which a frame inner panel 341 on the inner side in the vehicle width direction and a frame outer panel 342 on the outer side in the vehicle width direction are joined to each other and a cross-sectional shape orthogonal to the front-rear direction is U-shaped (a so-called monaka shape), along the front-rear direction. The front frame front body portion 34 is coupled to the front frame rear portion 32 in a state where a rear end portion thereof abuts the vertical wall-shaped rib 32f (see FIGs. 2 and 3) in the lower portion of the front end portion (a front end lower portion) of the front frame rear portion 32 from the front.

In this way, as illustrated in FIG. 2, the front frame front body portion 34 extends forward from the front end lower portion of the front frame rear portion 32 to a front end portion of the front frame 3. That is, the front frame rear portion 32 and the front frame front body portion 34 are disposed in series along the center axis of the front frame 3.

Here, the front frame front body portion 34 serves not only as a part of the front frame 3 but also as the upper arm support frame (34) provided in the subframe 110 as illustrated in FIG. 2.

The front extending portion 33 extends forward from an upper portion of the front end portion (a front end upper portion) of the front frame rear portion 32 to the front end portion of the front frame 3, is arranged on top of the front frame front body portion 34, and is configured to support the front frame front body portion 34 from directly above and support a vehicle inner side of a suspension housing 65.

### (Front Frame Rear Portion 32)

As illustrated in FIG. 4, the front frame rear portion 32 includes: an upper wall portion 32a; a rear enlarged outer portion 32b that is widened to the vehicle width outer side toward the rear from the front frame front portion 31; a rear enlarged inner portion 32c that is widened to the vehicle width inner side toward the rear from the front frame front portion 31; and a rear enlarged lower portion 32d that is widened downward to the rear from the front frame front portion 31.

### (Rear End Portion 32r of Front Frame Rear Portion 32)

The rear enlarged outer portion 32b couples outer end portions in the vehicle width direction of the upper wall portion 32a and the rear enlarged lower portion 32d in the up-down direction, and the rear enlarged inner portion 32c couples inner end portions in the vehicle width direction of the upper wall portion 32a and the rear enlarged lower portion 32d in the up-down direction.

As a result, as illustrated in FIG. 6, the front frame rear portion 32 is formed as a trumpet-shaped, box-shaped hollow body, whose entire periphery is surrounded by the upper wall portion 32a, the rear enlarged outer portion 32b, the rear enlarged inner portion 32c, and the rear enlarged lower portion 32d in a cross-sectional view orthogonal to the front-rear direction, whose inner space 32S (see FIGs. 4 and 6) is opened rearward, and both sides in the vehicle width direction and the lower side of which are gradually enlarged rearward.

As illustrated in FIGs. 3 and 4, the rear end portion 32r of the front frame rear portion 32 is joined to the front surface of the dash panel 2, and a rear end lower side portion 32dr as a rear end of the rear enlarged lower portion 32d is joined to the front surface of the dash panel 2 via the torque box 5 and a front end portion 122 of the tunnel side frame 12, which will be described below.

### (Torque Box 5)

As illustrated in FIGs. 3 and 4, the torque boxes 5 are a pair of left and right body strength members, each of which is joined to a lower front surface of the body portion 21 of the dash panel 2 and forms a closed cross section 5S extending in the vehicle width direction with the lower front surface, and, on each of the left and right sides, respectively connect the front end portion 122 of the tunnel side frame 12 and a front end portion of the side sill 4 in the vehicle width direction.

When the rear end lower side portion 32dr of the front frame rear portion 32 is described in detail, the rear end lower side portion 32dr extends along the vehicle width direction at a height of the torque box 5 that is joined to the lower front surface of the body portion 21 of the dash panel 2, and a portion thereof other than an inner end in the vehicle width direction is joined in a manner to abut a front surface portion of the torque box 5 from the front.

Meanwhile, a vehicle width inner end portion of the rear end lower side portion 32dr of the rear end portion 32r of the front frame rear portion 32 overlaps the front end portion 122 of the tunnel side frame 12 in a front view, that is, in the present example, the rear end lower side portion 32dr of the front frame rear portion 32 is joined in a manner to abut the front end portion 122 of the tunnel side frame 12 from the front.

As illustrated in FIG. 3, the tunnel side frame 12 described above has the closed cross section 12S over an entire length thereof in the front-rear direction, including the front end portion 122. A closed cross section of the front end portion 122 and a closed cross section of a portion 121 behind the front end portion 122 are continuous with each other in the front-rear direction via the dash panel 2.

As a result, it is configured that, during a frontal collision, the torque box 5 and the front end portion 122 of the tunnel side frame 12 receive the rear end lower side portion 32dr of the front frame rear portion 32 while a frontal collision load from the front frame 3 is transmitted and dispersed to the tunnel side frame 12 and the side sill 4.

The front frame rear portion 32 and the front extending portion 33 of the front frame front portion 31 described above are integrally formed with each other as a part of a cast body 100. Accordingly, the front frame 3 is formed by the front frame front body portion 34, which is made of a steel sheet, in the front frame front portion 31 and by the front frame rear portion 32 and the front extending portion 33, which are made of the cast body 100, in cooperation with each other. The above-described cast body 100 will be described below.

As illustrated in FIG. 3, a crash can 37 as a shock absorbing member is attached to a front end portion of the front frame front body portion 34 in the front frame 3 via a set plate 35 and a bracket 36, and a bumper beam 38 that has a closed cross section extending in the vehicle width direction is coupled between front end portions of a pair of the left and right crash cans 37.

### (Side Sill 4)

As illustrated in FIGs. 1 to 3 and 5, the side sill 4 is provided to extend in the body front-rear direction along an end portion of the floor panel 1 in the body width direction, and is disposed on the outer side in the body width direction and the lower side of the front frame 3. The side sill 4 mainly includes an inner side sill 41, an outer side sill 42, and a side sill rein 43 (see FIG. 4). On the outer side of the inner side sill 41 in the vehicle width direction, the outer side sill 42 includes an upper outer side sill 421 provided in an upper portion of the side sill 4 and a lower outer side sill 422 provided in a lower portion thereof.

Each of these elements 41, 421, 422, 43 of the side sill 4 is formed by pressing a metal panel member.

The inner side sill 41 extends over an entire length of the side sill 4 in the up-down direction in a manner to be inclined upward and outward in the vehicle width direction. Each of the upper outer side sill 421 and the lower outer side sill 422 is formed to have a hat-shaped cross section that is opened inward in the body width direction.

In the lower portion of the side sill 4, an inner end portion of the lower outer side sill 422 in the vehicle width direction is joined to a lower portion of the inner side sill 41. The lower outer side sill 422 is configured to have a tilted installation posture that extends from the inner side sill 41 to the outer side of a vehicle width outer surface portion of the upper outer side sill 421 in the vehicle width direction (that is, a horizontally long shape in the vehicle front view).

As a result, the lower outer side sill 422 and the inner side sill 41 form a lower side sill closed cross section 422S, which extends over an entire area of the lower portion of the side sill 4 in the vehicle width direction, therebetween (see FIG. 4).

The upper outer side sill 421 and the side sill rein 43 are vertically provided from an upper surface portion 422a of the lower outer side sill 422 as a base at a position near the inner side in the vehicle width direction in the lower portion of the side sill 4. Together with the side sill rein 43, a lower end portion 421a of the upper outer side sill 421 is joined to the upper surface portion 422a of the lower outer side sill 422 in a state of interposing the side sill rein 43 between the upper outer side sill 421 and the inner side sill 41 in the vehicle width direction, and an upper end portion thereof is joined to an upper end portion of the inner side sill 41. As a result, between the upper outer side sill 421 and the inner side sill 41, an upper side sill closed cross section 421S is formed at a position near the inner side in the vehicle width direction in the upper portion of the side sill 4 (see FIG. 4).

On the upper and lower sides of the side sill 4, the upper side sill closed cross section 421S and the lower side sill closed cross section 422S as the side sill closed cross sections 421S, 422S are formed over the entire length in the front-rear direction to the substantially front end portion of the side sill 4, and are opened to the front of the vehicle in front end portions of the inner side sill 41, the outer side sill 42, and the side sill rein 43.

As illustrated in FIG. 2, a front portion of the side sill 4 extends farther forward than a front pillar base portion 6A, which will be described below, and at a front end thereof, both of the upper side sill closed cross section 421S and the lower side sill closed cross section 422S are opened to the front. A lid member 50 as a closing member is attached to both of an upper opening 421A, which is opened to the front at a front end of the upper side sill closed cross section 421S, and a lower opening 422A, which is opened to the front at a front end of the lower side sill closed cross section 422S. As a result, the upper opening 421A and the lower opening 422A are closed (see FIGs. 1, 4, 5, and 8).

More specifically, the lid member 50 is integrally formed by a flat plate-shaped lid body portion 51 that has a plate thickness in the front-rear direction and an inner edge flange portion 52 that extends rearward from a vehicle width inner end of the lid body portion 51. Each of the lid body portion 51 and the inner edge flange portion 52 is formed to have a height from a lower end of the side sill 4 to a position higher than an upper end of the side sill 4.

At a front end of the side sill 4, the lid body portion 51 is arranged in a vertical wall shape to be able to close the upper opening 421A and the lower opening 422A, and, more specifically, as illustrated in FIG. 6, entirety thereof is arranged to be inclined rearward to the inner side in the vehicle width direction in a manner to correspond to a shape of the front end portion of each of the inner side sill 41, the outer side sill 42, and the side sill rein 43.

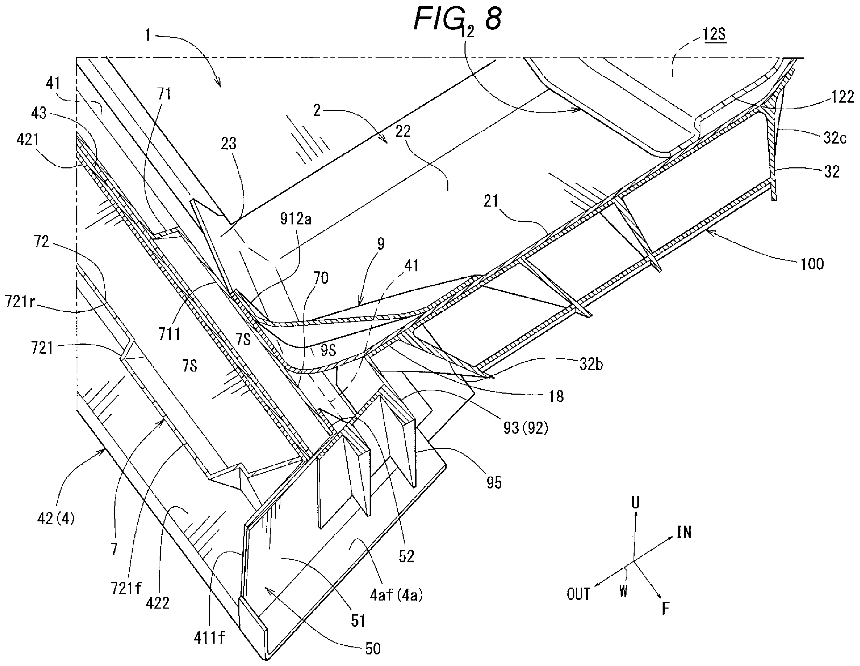

Here, a lower wall portion 4a of the side sill 4 is integrally formed with a lid support piece 4af that extends forward from the front end of the lower side sill closed cross section 422S. Furthermore, as illustrated in FIG. 8, a front end of the upper outer side sill 421 is integrally formed with a front end flange portion 411f that extends in a brim shape in an opposite direction to the upper side sill closed cross section 421S in the vehicle width direction.

In the lid member 50, a lower end portion of the lid body portion 51 is supported by the lid support piece 4af of the lower outer side sill 422, and a rear surface of the lid body portion 51 is joined to the front end flange portion 411f of the upper outer side sill 421. As illustrated in FIG. 8, in the lid member 50, in an upper portion that corresponds to a height of a lower end portion of a hinge pillar 7, which will be described below, the inner edge flange portion 52 is joined to a lower portion of an inner hinge pillar 71, that is, a side inner panel 70 from the inner side in the vehicle width direction, and in a lower portion that corresponds to a height of the side sill 4, the inner edge flange portion 52 is joined to the inner side sill 41 from the inner side in the vehicle width direction.

Thus, the lid member 50 is integrally fixed to the front end portion of the side sill 4 and the lower end portion of the hinge pillar 7.

### (Front Pillar 6)

As illustrated in FIGs. 1 and 2, the front pillar 6 extends along the front-down direction by joining an outer front pillar 6a and an inner front pillar 6b at a side edge that corresponds to each of left and right side edges of an opening for disposing the front windshield (not illustrated), which is inclined in the front-down direction.

The front pillar 6 is a body strength member that has a front pillar closed cross section 6S and supports the front windshield from each of the left and right sides via a filler.

### (Hinge Pillar 7)

As illustrated in FIGs. 1, 2, and 5 to 7, on each of the left and right sides of the dash panel 2, the hinge pillar 7 extends in the up-down direction between the front lower end portion (hereinafter referred to as the "front pillar base portion") 6A, which serves as a base portion of the front pillar 6, and the side sill 4. The hinge pillar 7 is a body strength member that has a hinge pillar closed cross section 7S extending along the up-down direction by joining the inner hinge pillar 71 and an outer hinge pillar 72.

More specifically, as illustrated in FIG. 6, the inner hinge pillar 71 includes an inner body portion 711, a front flange portion 712 that extends forward from an outer end in the vehicle width direction of a front surface of the inner body portion 711, and a rear flange portion 713 that extends rearward from an outer end in the vehicle width direction of a rear surface of the inner body portion 711, and is formed to have a substantially hat-shaped cross section, which is orthogonal to the up-down direction, as a whole. The inner body portion 711 serves as a front surface, a vehicle width inner surface, and a rear surface of the inner hinge pillar 71, and has an outer opening 71A that is opened to the outer hinge pillar 72.

The outer hinge pillar 72 includes an outer body portion 721, a front flange portion 722 that extends forward from an outer end in the vehicle width direction of a front surface of the outer body portion 721, and a rear flange portion 723 that extends rearward from an outer end in the vehicle width direction of a rear surface of the outer body portion 721, and is formed to have a substantially hat-shaped cross section, which is orthogonal to the up-down direction, as a whole. The outer body portion 721 serves as a front surface, a vehicle width outer surface, and a rear surface of the outer hinge pillar 72, and has an inner opening 72A that is opened to the inner hinge pillar 71.

As illustrated in FIG. 2, the outer body portion 721 is formed to bulge over a substantially entire length in the up-down direction such that a side surface front portion 721f is raised one step higher to the outer side in the vehicle width direction than a side surface rear portion 721r. A hinge attachment portion 15 (15a, 15b) for attaching a door hinge 16 (16a, 16b), which pivotally supports a front end of a swing door (17) in an openable/closable manner, is provided on each of upper and lower sides of the side surface front portion 721f of the outer body portion 721 (see FIG. 2).

The inner hinge pillar 71 and the outer hinge pillar 72 have the hinge pillar closed cross section 7S, which continues in the up-down direction, therebetween by joining the front flange portions 712, 722 and joining the rear flange portions 713, 723.

As illustrated in FIG. 2, the outer hinge pillar 72 of the hinge pillar 7 is arranged such that at least a front portion (the side surface front portion 721f of the outer body portion 721 and the front flange portion 712) in the front-rear direction is displaced downward to the front from an upper end portion joined to the front pillar base portion 6A and is inclined downward to the front in a vehicle side view, and a lower end portion (72a) is joined to the front end portion of the side sill 4.

Meanwhile, the inner hinge pillar 71 includes the side inner panel 70 that extends forward from an end portion on the outer side in the body width direction of the front surface of the inner body portion 711.

The side inner panel 70 is integrally formed in a vertical wall shape with the inner body portion 711 in a manner to form a side surface portion of a body front portion in front of the inner body portion 711, and the vehicle width outer edge flange portion 23 of the dash panel 2 is joined thereto from the inner side in the vehicle width direction. The front flange portion 712 of the inner hinge pillar 71 is provided in a front end portion of the side inner panel 70.

The side inner panel 70 may be formed by a single member as a part of the inner hinge pillar 71, or may be formed by a different member as a separate member from the inner hinge pillar 71 and joined thereto.

In the outer hinge pillar 72, the outer body portion 721 having the inner opening 72A opposes not only the inner body portion 711 of the inner hinge pillar 71 but also a portion behind the front flange portion 712 of the side inner panel 70 via the hinge pillar closed cross section 7S in the vehicle width direction. That is, in the hinge pillar 7, as described above, in association with the arrangement of at least the front portion of the outer hinge pillar 72 that is inclined downward to the front in the vehicle side view, the hinge pillar closed cross section 7S is arranged farther forward (that is, expands farther forward) than a front end of the inner body portion 711 (the outer opening 71A) over the entire length in the up-down direction, and the lower end portion (72a) thereof is joined to the front end portion of the side sill 4 (see FIG. 2).

The hinge attachment portion 15 (15a, 15b) is provided on each of the upper and lower sides of a vehicle width outer surface of the side surface front portion 721f of the outer body portion 721 of the outer hinge pillar 72. As described above, as illustrated in FIG. 2, in correspondence with the arrangement of the front portion of the outer hinge pillar 72 that is inclined downward to the front in the vehicle side view, the upper and lower hinge attachment portions 15a, 15b are attached in such a posture that the lower hinge attachment portion 15b is located in front of the upper hinge attachment portion 15a and that the door hinges 16 (16a, 16b) attached to the upper and lower hinge attachment portions 15a, 15b are each inclined downward to the rear.

Then, the outer hinge pillar 72, which is arranged to be inclined downward to the front, pivotally supports the swing door 17 as a flip-up side door (17), in which a door rear portion is displaced outward and upward like a scissor door or a butterfly door when the door is opened, via the upper and lower door hinges 16 (see FIG. 2).

The side surface front portion 721f of the outer body portion 721 of the outer hinge pillar 72 is formed with an inward deformed portion 73 in which a vehicle width outer surface is displaced such that a portion of the outer hinge pillar 72 below the lower hinge attachment portion 15b of the upper and lower hinge attachment portions 15a, 15b is inclined inward in the vehicle width direction. A flange portion 72a, which is formed in a lower end portion of the outer hinge pillar 72 including a lower end portion of an inward deformed portion 73, is joined to a shoulder portion of the outer side sill 42 (an upper portion of the outer side sill 42).

As a result, the side sill 4 is arranged at a position at which at least a part thereof overlaps the flange portion 72a, which is formed in the lower end portion of the outer hinge pillar 72 including the lower end portion of the inward deformed portion 73, in the vehicle width direction.

More specifically, in the side sill 4, an outer end of the upper outer side sill 421 in the vehicle width direction is arranged on the inner side in the vehicle width direction of a vehicle width outer surface portion, which is formed with the upper and lower hinge attachment portions 15, in the outer hinge pillar 72 (see FIG. 8). In the present example, the side sill 4 including an outer end of the lower outer side sill 422 in the vehicle width direction is arranged on the inner side in the vehicle width direction of the vehicle width outer surface portion, which is formed with the upper and lower hinge attachment portions 15, in the outer hinge pillar 72 (see FIG. 8).

A flange portion 71a, which is provided in a lower end portion of the inner hinge pillar 71, is joined to a shoulder portion of the inner side sill 41 (an upper portion of the inner side sill 41).

### (Cowl Side Rein 60)

Meanwhile, as illustrated in FIG. 1, a cowl side rein 60 that extends forward from the upper portion of the hinge pillar 7 is provided on the vehicle width inner side and near the front side of the upper portion of the hinge pillar 7. The cowl side rein 60 is formed to have a substantially closed cross-sectional shape that extends in the front-rear direction by an inner panel (not illustrated) serving as a vehicle width inner wall and a bottom wall, an outer panel (not illustrated) serving as a vehicle width outer wall, and an upper panel 63 serving as an upper wall.

The outer panel of the cowl side rein 60 is joined to the side inner panel 70, which extends forward from the inner body portion 711 of the inner hinge pillar 71, from the vehicle width inner side. That is, in the vicinity of the upper portion of the hinge pillar 7, the cowl side rein 60 is indirectly supported by the hinge pillar 7.

Both left and right end portions of the trough-shaped cowl panel 14 (see FIG. 1), which is provided in an upper end portion of the dash panel 2, are joined to the inner panels of the cowl side reins 60, and the cowl panel 14 is thereby supported from both the left and right end portions.

### (Apron Frame 8)

As illustrated in FIGs. 1 to 5, the apron frames 8 extend in the front-rear direction at positions on the outer side in the vehicle width direction of and above the pair of the left and right front frames 3, which is described above and extends in the front-rear direction, and support vehicle outer sides of the suspension housings 65.

A rear end portion of the apron frame 8 is joined to a front end portion of the cowl side rein 60 that is adjacent to the upper portion of the hinge pillar 7 from the inner side in the vehicle width direction. Thus, the apron frame 8 extends forward from the cowl side rein 60 near the front pillar base portion 6A, and is joined to the upper portion of the hinge pillar 7 via the cowl side rein 60 from the inner side in the vehicle width direction.

More specifically, the apron frame 8 includes an apron frame body portion 81 and an upper surface plate member 82 provided above the apron frame body portion 81. In other words, as illustrated in FIGs. 2 and 3, the apron frame 8 is divided into an apron rear region 8R that extends forward from the cowl side rein 60 and an apron front region 8F that extends further forward from a front end of the apron rear region 8R.

Each of the apron frame body portion 81 and the upper surface plate member 82 is continuously provided over an entire length of the apron frame 8 including the apron rear region 8R and the apron front region 8F. A rear end portion of the upper surface plate member 82 is joined to a front end portion of the upper panel 63 of the cowl side rein 60, and a rear end portion of the apron frame body portion 81 is joined to front end portions of the inner panel and the outer panel of the cowl side rein 60. As will be described below, the apron frame body portion 81 is formed as a part of the cast body 100. Meanwhile, the upper surface plate member 82 is formed of a metal plate material, such as a steel plate, in a substantially flat plate shape that serves as an upper surface of the apron frame 8, has a plate thickness in the up-down direction, and is long in the front-rear direction.

As illustrated in FIG. 4, in the apron front region 8F, the apron frame body portion 81 is integrally formed by a pair of inner and outer side wall portions 83a, 83b, which are spaced apart in the vehicle width direction in a manner to oppose each other, and a horizontal wall portion 84, which extends along the vehicle width direction between the pair of inner and outer side wall portions 83a, 83b in a manner to couple intermediate portions in the up-down direction of these side wall portions, such that an orthogonal cross section orthogonal to the front-rear direction substantially has an H-shape. That is, in the apron front region 8F of the apron frame body portion 81, an upper portion is opened upward with respect to the horizontal wall portion 84, and a lower portion is opened downward with respect thereto.

The upper surface plate member 82 is supported by upper end portions of the pair of inner and outer side wall portions 83a, 83b of the apron frame body portion 81 in a manner to be bridged therebetween, and is arranged to serve as the upper surface of the apron frame 8. In this way, in the apron front region 8F, the apron frame 8 has a closed cross section 8S along the front-rear direction between the upper surface plate member 82 and the apron frame body portion 81.

### (Suspension Housing 65)

As illustrated in FIGs. 1 and 2, the suspension housing 65 is suspended in the vehicle width direction between the front frame 3 and the apron frame 8 in a manner to be supported in cooperation thereof. The suspension housing 65 is spaced forward from the hinge pillar 7 and the dash panel 2, and a front suspension is accommodated below.

A suspension top portion 65a, to which a damper (not illustrated) provided in the front suspension is attached from below, is provided in a top portion of the suspension housing 65.

### (Bracing Rein 90)

As illustrated in FIGs. 1, 2, 4, 5, and 7, between a front portion of the hinge pillar 7 and a lower portion of the apron frame 8, a first bracing rein 91 and a second bracing rein 92 are provided as a bracing rein 90 that couples these in a bracing manner in the vehicle side view.

Each of the first bracing rein 91 and the second bracing rein 92 extends in a manner to be inclined downward to the rear from the lower portion of the apron frame 8 to the front portion of the hinge pillar 7.

Here, as described above, in association with the arrangement of the outer hinge pillar 72 to be inclined downward to the front from the front pillar base portion 6A, as illustrated in FIG. 2, a lower end portion of each of the first bracing rein 91 and the second bracing rein 92 is joined to a portion of the hinge pillar 7 located in front of the upper end portion thereof, which is located in the front pillar base portion 6A.

Here, an upper surface portion of the first bracing rein 91 is formed in a substantially horizontal surface shape that is flush with an upper lid portion of the cowl side rein 60, and is integrally formed therewith by a single member.

The first bracing rein 91 couples an upper front portion of the outer pillar panel and the lower portion of the apron frame 8 in a bracing manner in the vicinity of the cowl side rein 60, and forms a first bracing closed cross section 91S with the outer panel of the cowl side rein 60 (see FIG. 1).

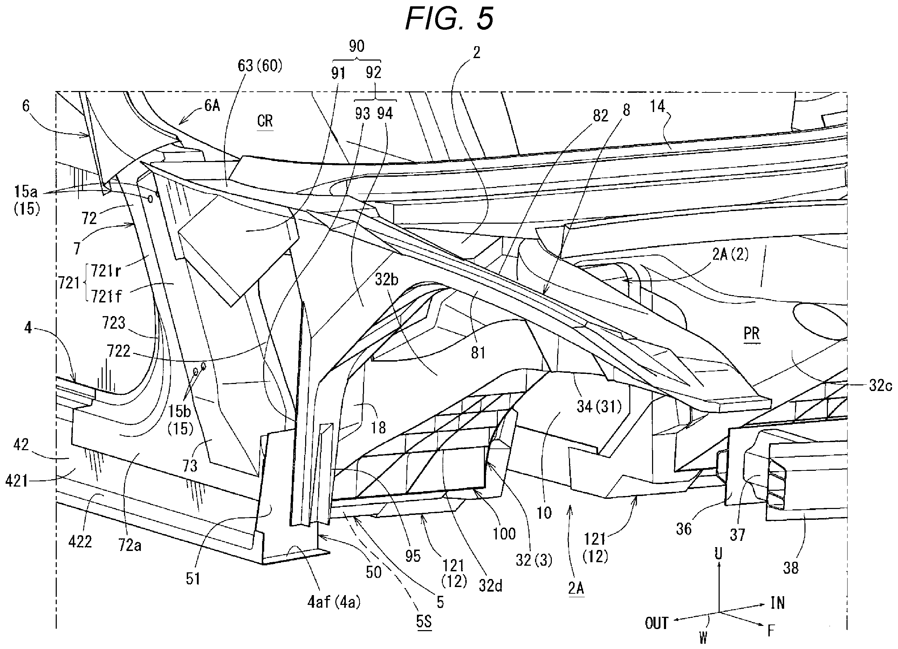

As illustrated in FIGs. 2 and 5, on the inner side in the vehicle width direction and in front of the first bracing rein 91, that is, directly below the apron frame 8, the second bracing rein 92 joins a lower portion of the apron front region 8F of the apron frame 8 and the lower end portion of the hinge pillar 7 (the hinge pillar closed cross section 7S).

More specifically, the second bracing rein 92 is integrally formed by an apron support portion 93, which hangs vertically downward from the rear end portion of the apron frame 8, and a bracing body portion 94, which couples the apron support portion 93 and the lower portion of the apron front region 8F in a bracing manner.

The apron support portion 93 hangs down until a lower end portion thereof reaches the height of the side sill 4, is joined to a front surface of the lid member 50, which has a vertical wall shape and is provided at a front end of the side sill 4, and is joined to the side sill 4 and the hinge pillar 7 via the lid member 50.

More specifically, a lower portion of the apron support portion 93 is coupled to the upper and lower side sill closed cross sections 421S, 422S of the side sill 4 via the lid body portion 51 of the lid member 50, and is joined to the hinge pillar closed cross section 7S via the inner edge flange portion 52 of the lid member 50. The lower portion of the apron support portion 93 is arranged at a position close to the inner side in the vehicle width direction such that an outer portion thereof in the vehicle width direction mainly overlaps the inner side sill 41 of the elements 41, 42, 43 constituting the side sill 4 in the vehicle front view.

### (Rib 95)

Furthermore, as illustrated in FIGs. 4 to 6 and 8, in the apron support portion 93 that extends in the up-down direction, a portion below a joint portion, which is located at a rear end of the bracing body portion 94, is provided with a pair of left and right ribs 95, each of which continues in the up-down direction to a lower end of the apron support portion 93.

This rib 95 extends in the up-down direction from a position above the lid member 50 in a manner to overlap the lid member 50 in the vehicle front view, and increases strength of a portion of the apron support portion 93 below the bracing body portion 94. More specifically, when the frontal collision load from the front frame 3 is transmitted to the side of the side sill 4 and the hinge pillar 7, which are provided below and the vehicle width outer side of the front frame 3, via the second bracing rein 92, the frontal collision load is transmitted along the rib 95, and load transmission efficiency is thereby improved.

At a position between the apron support portion 93 and the apron frame 8, the bracing body portion 94 couples these in a bracing manner. More specifically, a rear end portion of the bracing body portion 94 is coupled to an upper portion of the apron support portion 93, which is provided along the up-down direction, from an upper end to an intermediate portion in the up-down direction. Meanwhile, an upper end portion of the bracing body portion 94 is coupled to a lower portion of the apron rear region 8R over an entire length in the front-rear direction, and a front end portion of the bracing body portion 94 is coupled to a rear end portion of the apron front region 8F that is located in front of a rear portion of the suspension housing 65.

Here, as described above, the apron support portion 93 of the second bracing rein 92 extends in the up-down direction directly below the rear end portion of the apron frame 8. Between such an apron support portion 93 and the rear enlarged outer portion 32b (a vehicle width outer portion) of the front frame rear portion 32 as the above-described rear enlargement portion, a coupling margin portion 18 is integrally formed to couple these in the vehicle width direction.

### (Cast Body 100)

As illustrated in FIGs. 1 to 4, the above-described cast body 100 includes the front frame rear portion 32, a portion of the apron frame 8 other than the upper surface plate member 82, the second bracing rein 92, the suspension housing 65, and the coupling margin portion 18.

Furthermore, the cast body 100 includes a left-right connection portion 28 that couples upper portions of the rear enlarged inner portions 32c (vehicle width inner portions), which are respectively coupled to left and right tunnel opening side portions 2Aa of the tunnel opening 2A of the dash panel 2, in the left and right front frame rear portions 32 along a tunnel opening upper side portion 2Ab of the tunnel opening 2A of the dash panel 2. The left-right connection portion 28 is integrally formed with vehicle width inner portions of the left and right front frame rear portions 32. The cast body 100 is also referred to as gigacast and is made of an aluminum alloy that is integrally cast as a relatively large single component including the above-described elements (modules) provided in a front portion of the body.

### (Truss Structure)

As illustrated in FIG. 2, in each of the left and right side surface portions of the body front portion, a truss structure (hereinafter referred to as a "front truss structure") Tf that has the apron support portion 93 as a rear side and a truss structure (hereinafter referred to as a "rear truss structure") Tr that has the apron support portion 93 as a front side in a body side view are formed to be adjacent in the front-rear direction.

More specifically, as described above, the outer hinge pillar 72 is arranged to be inclined downward to the front from the front pillar base portion 6A, and the lower end portion thereof is joined to the front end portion of the side sill 4. Furthermore, the cowl side rein 60 extends substantially horizontally to the front in the vehicle from the front pillar base portion 6A and is supported by the second bracing rein 92. The second bracing rein 92 includes the apron support portion 93 of the second bracing rein 92, the apron support portion 93 hanging downward from the front end portion of the cowl side rein 60, and the lower end portion thereof being joined to the front end portion of the side sill 4 via the lid member 50 portion.

Then, the upper end portion of the outer hinge pillar 72 and the rear end portion of the cowl side rein 60 are joined in the front pillar base portion 6A, the front end portion 122 of the outer hinge pillar 72 and the lower end portion of the apron support portion 93 are joined in the front end portion of the side sill 4, and the front end portion of the cowl side rein 60 and the upper end portion of the apron support portion 93 are joined at a position directly in front of the front pillar base portion 6A and directly above the front end portion of the side sill 4.

In this way, the outer hinge pillar 72, the cowl side rein 60, and the apron support portion 93 constitute the rear truss structure Tr in the vehicle side view.

As described above, the bracing body portion 94 of the second bracing rein 92 extends to be inclined in the front-up direction from the lower portion of the apron support portion 93 in the up-down direction to the position in front of the rear portion of the suspension housing 65 of the apron rear region 8R. The apron frame 8 extends substantially horizontally to the front from the front end portion of the cowl side rein 60 to at least the suspension housing 65.

Then, a front lower end portion of the bracing body portion 94 and the lower portion of the apron support portion 93 are joined in the vicinity of the front end portion of the side sill 4, the apron frame 8 and a front upper end of the bracing body portion 94 are joined in the vicinity of the rear side of the cowl side rein 60, and the rear end portion of the apron frame 8 and the upper end portion of the apron support portion 93 are joined directly above the front end portion of the side sill 4 and directly behind the suspension housing 65.

In this way, by using the cast body 100, the front truss structure Tf is formed by the bracing body portion 94, the apron frame 8, and the apron support portion 93 in the vehicle side view.

The front truss structure Tf and the rear truss structure Tr described above are each formed by including the apron support portion 93 as the common vertical side, and thus are formed as a continuous structure adjacent to each of the front and rear sides.

Thus, during travel of the vehicle, an input load that is input from a front wheel FW to the suspension housing 65 via the suspension damper can be supported by the front truss structure Tf and the rear truss structure Tr. In particular, the front truss structure Tf and the rear truss structure Tr are the continuous structure, and thus can improve a transmission property of the load (energy) that is input to the suspension housing 65 during the travel of the vehicle.

Accordingly, it is possible to increase torsional rigidity during the travel of the vehicle, for example, and to improve responsiveness during cornering, for example.

The front truss structure Tf includes the bracing body portion 94, which is along a wheelhouse arch, directly behind the front wheel FW, and thus can contribute to flipping of the front wheel FW, which moves rearward during the frontal collision, to the outer side in the vehicle width direction.

### (Dash Rein 9)

As illustrated in FIG. 8, the dash rein 9 is joined to a surface of the dash panel 2 on the inner side of the cabin CR, and forms a closed cross section 9S with the surface thereof on the inner side of the cabin CR.

The closed cross section 9S is configured to continuously extend downward to the outer side in the vehicle width direction from the rear end portion of the front frame 3 to the hinge pillar 7 and the inner side sill 41 directly below it in a manner to overlap a rear end of the rear enlarged outer portion 32b (a vehicle outer side portion) of the front frame rear portion 32 as the box-shaped hollow body in a vehicle rear view and to overlap the inner side sill 41 in a vehicle plan view.

An outer edge flange portion 912a of the dash rein 9 in the vehicle width direction is joined to the inner hinge pillar 71 and the inner side sill 41 directly below it via the vehicle width outer edge flange portion 23 of the dash panel 2. In this way, the closed cross section 9S of the dash rein 9 is coupled to the side sill closed cross sections 421S, 422S and the hinge pillar closed cross section 7S on top thereof in the vehicle width direction.

As illustrated in FIGs. 1 to 3, the body structure for a vehicle according to the present embodiment is configured to include: a dash panel 2 that separates the cabin CR and the power unit room PR (the front space) of the cabin CR in the front-rear direction; the front frame 3 that extends forward from the dash panel 2 and supports the vehicle inner side of the suspension housing 65 for the front wheel FW; the front pillar 6 that has the closed cross section extending in the front-down direction and supports the front windshield (not illustrated) from each of the left and right sides; the apron frame 8 that extends forward from the cowl side rein 60 near the front pillar base portion 6A and supports the vehicle outer side of the suspension housing 65 for the front wheel FW; the pair of the left and right side sills 4, which is arranged on both of the left and right sides on the rear side of the lower portion of the dash panel 2 and extends in the front-rear direction; the hinge pillar closed cross section 7S of the hinge pillar 7 that extends in the up-down direction between the front pillar base portion 6A and the side sill 4; and the bracing rein 90 (91, 92) that obliquely joins the front portion of the hinge pillar 7 and the lower portion of the apron frame 8 in the vehicle side view.

Furthermore, as illustrated in FIGs. 2, 5, and 6, in the hinge pillar 7, the hinge pillar closed cross section 7S, which extends in the up-down direction, is displaced forward (arranged forward) to the bottom near the height of the side sill 4 from the front pillar base portion 6A, and as illustrated in FIGs. 2 and 5 to 8, the lower end portions of the first bracing rein 91 and the second bracing rein 92 as the bracing rein 90 are joined to the portion of the hinge pillar 7 located in front of the upper end portion thereof, which is joined to the front pillar base portion 6A.

With the above-described configuration, while maintaining the joint state of the upper end portion with the front pillar base portion 6A, the hinge pillar 7 is inclined downward to the front in the vehicle side view so as to be close to the suspension housing 65, which is provided on the front side of the vehicle, and thereby shorten the bracing rein 90. In this way, the suspension housing 65 can firmly be supported by the hinge pillar 7.

As illustrated in FIGs. 2, 5, and 7, as an aspect of the invention, the hinge pillar 7 includes the outer hinge pillar 72 that is provided with the hinge attachment portions 15 (15a, 15b) for attaching the door hinges 16 on the upper and lower sides. The bracing rein 90 includes the first bracing rein 91 that joins the hinge pillar closed cross section 7S, which corresponds to the height of the upper hinge attachment portion 15 of the upper and lower hinge attachment portions 15a, 15b of the outer hinge pillar 72, and the base portion of the apron frame 8.

With this configuration, the first bracing rein 91 is provided in a branch portion between the apron frame 8 and the hinge pillar 7 in order to join the apron frame 8, which extends forward from the vicinity of the front pillar base portion 6A, and the hinge pillar 7, which extends downward, by the first bracing rein 91. The hinge pillar 7 is inclined downward to the front from the front pillar base portion 6A toward the suspension housing 65. Thus, the first bracing rein 91 can be downsized.

As illustrated in FIGs. 2 and 5 to 8, as an aspect of the invention, the lower end portion of the hinge pillar 7 is joined to the front end portion of the side sill 4, and the bracing rein 90 includes the second bracing rein 92 that joins the portion in front of the base portion of the apron frame 8 and the lower end portion of the hinge pillar 7.

With this configuration, the suspension housing 65 can be supported via the second bracing rein 92 by the lower end portion of the hinge pillar 7, which is the joint portion with the front end portion of the side sill 4, that is, the lower end portion of the hinge pillar closed cross section 7S.

As illustrated in FIG. 2, as an aspect of the invention, the hinge pillar 7 includes the outer hinge pillar 72 that is displaced forward to the bottom from the front pillar base portion 6A and is arranged to be inclined downward to the front in the vehicle side view, the pair of the upper and lower door hinges 16 is provided in the outer hinge pillar 72 along a front-down inclination direction, and the front side portion of the swing door 17, the door rear portion of which is displaced upward when the door is opened, is pivotally supported by the outer hinge pillar 72 via the pair of the upper and lower door hinges 16.

With this configuration, the pair of the upper and lower door hinges 16 can be attached along the front-down inclination direction by the outer hinge pillar 72, which is arranged to be inclined downward to the front. Thus, the swing door 17 can be pivotally supported by the outer hinge pillar 72 via the door hinges 16 such that the door rear portion can be displaced upward when the door is opened.

As a result, the side door (17) having a high design property can be achieved by using the outer hinge pillar 72, which is arranged to be inclined downward to the front.

In correspondence between the configuration in the invention and the above-described embodiment, the front space in the invention corresponds to the power unit room PR. Hereinafter, similarly, the front-wheel suspension housing corresponds to the suspension housing 65, and the first bracing rein corresponds to the first bracing rein 91. However, the invention is not limited only to the configuration in the above-described embodiment, and many embodiments can be obtained.

### [Reference Signs List]

2: dash panel
3: front frame
4: side sill
6: front pillar
6A: front pillar base portion
7: hinge pillar
7S: hinge pillar closed cross section
8: apron frame
15: hinge attachment portion
15a: upper hinge attachment portion
16: door hinge
17: swing door
65: suspension housing
72: outer hinge pillar
90: bracing rein
91: first bracing rein
92: second bracing rein
CR: cabin
PR: power unit room

## Claims

1. A body structure for a vehicle comprising:
a dash panel (2) that separates a cabin (CR) and a front space of the cabin (CR) in a vehicle front-rear direction;
a front frame (3) that extends forward from the dash panel (2) and supports a vehicle inner side of a front-wheel suspension housing (65);
a front pillar (6) that has a closed cross section extending in a front-down direction and supports a front windshield from each of left and right sides;
an apron frame (8) that extends forward from vicinity of a base portion of the front pillar (6) and supports a vehicle outer side of the front-wheel suspension housing (65);
a pair of left and right side sills (4), which is arranged on both left and right sides on a rear side of a lower portion of the dash panel (2) and extends in the vehicle front-rear direction;
a hinge pillar (7) that extends in an up-down direction between a base portion of the front pillar (6A) and respective one of the side sills (4); and
a bracing rein (90) that obliquely joins a front portion of the hinge pillar (7) and a lower portion of the apron frame (8) in a vehicle side view, wherein
in the hinge pillar (7), at least a front portion of a hinge pillar closed cross section (7S) that extends in the up-down direction is displaced forward to a bottom, which is near a height of respective one of the side sills (4), from the base portion of the front pillar (6), and
a lower end portion of the bracing rein (90) is joined to a portion of the hinge pillar (7) in front of an upper end portion thereof that is joined to the base portion of the front pillar (6).

2. The body structure for a vehicle according to claim 1, wherein
the hinge pillar (7) includes an outer hinge pillar (72) that is provided with a hinge attachment portion (15) for attaching a door hinge (16) on each of upper and lower sides.

3. The body structure for a vehicle according to claim 1 or 2, wherein the bracing rein (90) includes a first bracing rein (91) that joins the hinge pillar closed cross section (7S), which corresponds to a height of the upper hinge attachment portion (15a) of the upper and lower hinge attachment portions of the outer hinge pillar (7), and a base portion of the apron frame (8).

4. The body structure for a vehicle according to any one of the preceding claims wherein
a lower end portion of the hinge pillar (7) is joined to a front end portion of respective one of the side sills (4).

5. The body structure for a vehicle according to any one of the precding claims, wherein the bracing rein (90) includes a second bracing rein (92) that joins a portion in front of the base portion of the apron frame (8) and the lower end portion of the hinge pillar (7).

6. The body structure for a vehicle according to any one of the preceding claims, wherein
the hinge pillar (7) includes the outer hinge pillar (72) that is displaced forward to the bottom from the base portion of the front pillar (6) and is arranged to be inclined downward to the front in the vehicle side view.

7. , The body structure for a vehicle according to any one of the preceding claims, wherein a pair of upper and lower door hinges (16) is attached to the outer hinge pillar (72) along a front-down inclination direction.

8. The body structure for a vehicle according to any one of the preceding claims, wherein a swing door (17), a door rear portion of which is displaced upward when the door is opened, is pivotally supported by the outer hinge pillar (72) via the pair of upper and lower door hinges (16).

9. The body structure for a vehicle according to any one claims 3 to 8, wherein the first bracing rein (91), which is joined to the apron frame (8) extending forward from the vicinity of the front pillar base portion (6A) and the hinge pillar (7) extending downward, is provided in a joint portion therebetween.

10. The body structure for a vehicle according to any one claims 5 to 9, wherein the suspension housing (65) can be supported via the second bracing rein (92) by the lower end portion of the hinge pillar (7).

11. The body structure for a vehicle according to any one claims 3 to 10, wherein the first bracing rein (91) is joined to the apron frame (8) extending forward from the vicinity of the front pillar base portion and the hinge pillar extending downward.

12. The body structure for a vehicle according to any one of the preceding claims, wherein the side sills (4) include an inner side sill (41), an outer side sill (42), and a side sill rein (43).

13. The body structure for a vehicle according to claim 12, wherein the outer side sill (42) includes an upper outer side sill (421) provided in an upper portion of the side sill (4) and a lower outer side sill (422) provided in a lower portion thereof

14. The body structure for a vehicle according to claim 13, wherein the lower outer side sill (422) and the inner side sill (41) form a lower side sill closed cross section (422S), which extends over an entire area of the lower portion of the side sill (4) in the vehicle width direction, therebetween.

15. A vehicle comprising a body structure according to any one of the preceding claims.
